Europäisches Patentamt

European Patent Office

Office européen des brevets

(19)

(11) **EP 1 230 565 B1**

(12) **FASCICULE DE BREVET EUROPEEN**

(45) Date de publication et mention
de la délivrance du brevet:
**23.07.2003 Bulletin 2003/30**

(51) Int Cl.[7]: **G01V 1/28**

(86) Numéro de dépôt international:
**PCT/FR00/02920**

(21) Numéro de dépôt: **00969654.3**

(22) Date de dépôt: **20.10.2000**

(87) Numéro de publication internationale:
**WO 01/029578 (26.04.2001 Gazette 2001/17)**

(54) **PERFECTIONNEMENT AUX PROCEDES DE TRAITEMENT SISMIQUE**

VERBESSERTES VERFAHREN ZUR SEISMISCHEN DATENVERARBEITUNG

IMPROVEMENTS FOR SEISMIC PROCESSING METHODS

(84) Etats contractants désignés:
**FR GB IT NL**

(30) Priorité: **22.10.1999 FR 9913197**

(43) Date de publication de la demande:
**14.08.2002 Bulletin 2002/33**

(73) Titulaire: **COMPAGNIE GENERALE DE GEOPHYSIQUE**
**F-91300 Massy (FR)**

(72) Inventeurs:
• **GAROTTA, Robert**
**F-83590 Gonfaron (FR)**
• **GRANGER, Pierre-Yves**
**F-91300 Massy (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
US-A- 4 881 209       US-A- 4 933 913
US-A- 5 835 452

• MCCORMACK M D ET AL: "A case study of stratigraphic interpretation using shear and compressional seismic data" GEOPHYSICS, MAY 1984, USA, vol. 49, no. 5, pages 509-520, XP002143569 ISSN: 0016-8033
• IVERSON W P ET AL: "V/sub p/V/sub s/ from mode-converted P-SV reflections" GEOPHYSICS, JULY 1989, USA, vol. 54, no. 7, pages 843-852, XP002143570 ISSN: 0016-8033
• GAISER J E: "Multicomponent V/sub p//V/sub s/ correlation analysis" GEOPHYSICS, JULY-AUG. 1996, SOC. EXPLORATION GEOPHYSICISTS, USA, vol. 61, no. 4, pages 1137-1149, XP002143571 ISSN: 0016-8033

**Description**

La présente invention est relative à un procédé de traitement sismique.

Le principe général de la prospection sismique consiste à provoquer, à l'aide d'une source sismique, un ébranlement dans le sous-sol et à enregistrer, à l'aide de capteurs, des traces sismiques générées par cet ébranlement pour en tirer une information sur la géologie du sous-sol et en particulier pour détecter la présence d'hydrocarbures.

On rappelle qu'on distingue classiquement deux types d'ondes se propageant dans le sous-sol, à savoir les ondes de compression (ondes dites de type P), qui vibrent dans leur direction de propagation, et les ondes de cisaillement (ondes dites de type S), qui vibrent quant à elles perpendiculairement à leur direction de propagation.

Les traces sismiques recueillies en surface peuvent de ce fait correspondre à plusieurs modes de propagation de l'ébranlement sismique. Notamment, l'ébranlement peut être une onde de compression, tandis que les capteurs en surface enregistrent les composantes de compression des ondes réfléchies sur les différents interfaces du sous-sol (propagation dite de mode P) ou à leurs composantes de cisaillement (ondes converties - propagation de mode PS). L'ébranlement peut être également une onde de cisaillement, les capteurs en surface enregistrant les ondes de cisaillement (propagation dite de mode S).

Classiquement, les géomatériaux étudiés en sismique de réflexion sont caractérisés par leur densité $\rho$ et par les vitesses Vp et Vs des ondes de compression et de cisaillement. Il est en particulier possible d'exprimer la réflectivité d'un interface en fonction des trois paramètres. Les équations qui le permettent sont connues sous le nom d'équations de Zoeppritz et font intervenir l'angle d'incidence de l'onde sur l'interface considéré.

L'inversion sismique consiste à calculer ces trois paramètres $\rho$, Vp et Vs à partir des traces sismiques enregistrées en sismique de surface.

Un but de l'invention est de proposer un procédé de traitement sismique permettant une détermination rapide et robuste des différents paramètres $\rho$, Vp et Vs.

Elle tire à cet effet partie du fait que deux estimations indépendantes du rapport Vp/Vs sont possibles.

Il peut être estimé à partir des trajets verticaux des ondes S et des ondes P.

On pourra à cet égard se référer à l'article :
- McCormack M D et al. : « A case study of statigraphic interpretation using shear and compresional seismic data » - Geophysics, Mai 1984, USA, vol. 49, n°5, pages 509-520, XP002143569.

Il peut être en outre estimé à partir des réflectivités de deux (ou plusieurs) modes d'ondes réfléchies (ou converties) à l'interface considéré.

L'invention propose quant à elle de tirer partie de ces deux possibilités d'estimation. Elle propose notamment un procédé tel que défini dans la revendication 1.

Un tel procédé est avantageusement complété par les différentes caractéristiques suivantes prises seules ou selon toutes leurs combinaisons techniquement possibles :

- pour optimiser le rapport $r_t = Ts/Tp$, on détermine pour une pluralité de sous intervalles définis par des temps d'échantillonnage $t_i$ répartis sur l'intervalle considéré une estimation de $\delta V_p/V_p - \delta V_s/V_s$ en fonction de paramètres de réflectivité correspondant à l'un et à l'autre des deux modes de propagation, où $\delta V_p$ et $\delta V_s$ représentent respectivement la variation de la vitesse dans le domaine P et de la vitesse dans le domaine S sur un tel sous intervalle ;
- on détermine pour les différents temps d'échantillonnage ti de l'intervalle considéré les valeurs de Ts et Tp telles que pour chaque sous intervalle par ces temps d'échantillonnage ti, la variation différentielle relative $\delta r_t / r_t$ soit égale à l'estimation de $\delta V_p/V_p - \delta V_s/V_s$ déterminée pour ledit sous intervalle ;
- on détermine pour les différents temps d'échantillonnage ti de l'intervalle considéré les valeurs de Ts et Tp telles que pour chaque sous intervalle par ces temps d'échantillonnage ti, la variation différentielle relative $\delta r/r$, convoluée à l'ondelette sismique, soit égale à l'estimation de $\delta V_p/V_p - \delta V_s/V_s$ déterminée pour ledit sous intervalle ;
- les traces sismiques correspondent à des modes de propagation P et S ;
- pour estimer $\delta V_p/V_p - \delta V_s/V_s$, on calcule

$$(\delta r/r)_a = 2[R_p(0) - R_s(0)],$$

où $R_p(0)$ et $R_s(0)$ sont les réflectivités en mode P et en mode S à incidence normale ;

- les traces sismiques correspondent à des modes de propagation P et PS ;
- pour estimer $\delta V_p/V_p - \delta V_s/V_s$, on calcule

$$(\delta r \,/\, r)_a = 1\,/\,2_{\llcorner} \,(4 + r)R_{pp} - rG_{pp} + (2 + r)\,G_{ps\lrcorner}$$

où $R_{pp}$, $G_{pp}$ et $G_{ps}$ sont des paramètres de réflectivité du mode P et du mode PS.

L'invention concerne également un procédé de prospection sismique selon lequel on émet un ébranlement dans le sous-sol et on recueille à l'aide de capteurs des traces sismiques correspondant à deux modes de propagation différents et selon lequel on met en oeuvre un procédé de traitement sismique du type précité pour déterminer une information sur la géologie du sous sol.

D'autres caractéristiques et avantages de l'invention ressortiront encore de la description qui suit. Cette description est purement illustrative et non limitative. Elle doit être lue en regard des figures annexées sur lesquelles :

- la figure 1 est un schéma synoptique sur lequel on a porté différentes étapes d'un procédé conforme à un mode de mise en oeuvre possible de l'invention ;
- la figure 2 est un graphe sur lequel on a représenté l'allure de la courbe Tp en fonction de Ts déterminée selon un mode de mise en oeuvre possible de l'invention.

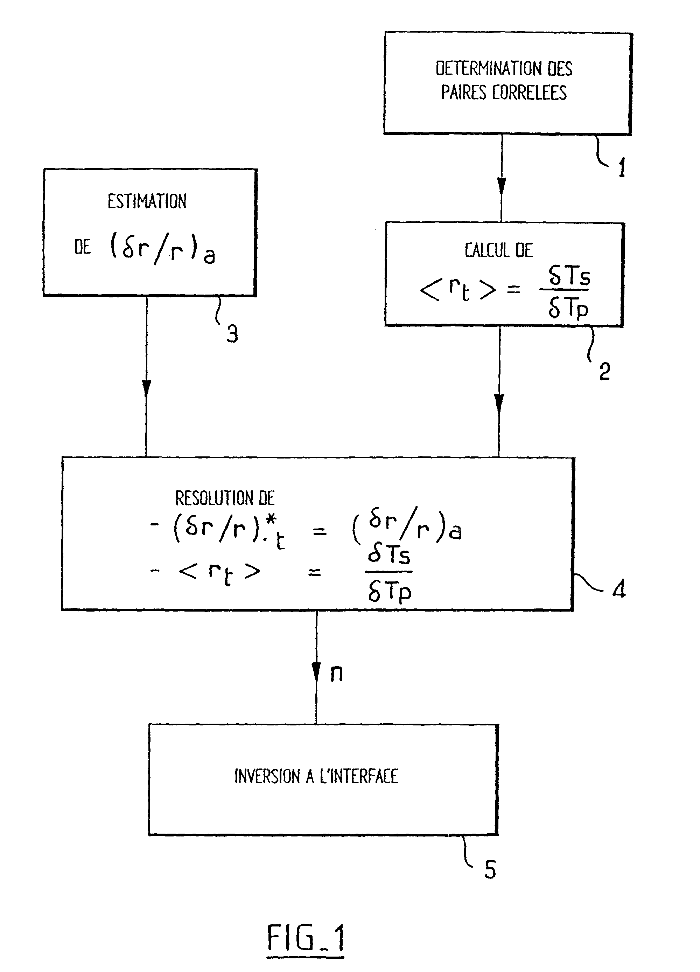

Selon le procédé qui est illustré sur la figure 1, on détermine dans une étape 1, des paires d'événements qui sont corrélés dans le domaine P et dans le domaine S. Cette détermination s'effectue à partir des traces sismiques du domaine P et des traces sismiques du domaine S, ayant éventuellement subies un pré-traitement.

On entend par événement corrélé un événement dont les temps de propagation, respectivement Tp et Ts sont connus et associés à un même réflecteur.

Une fois cette détermination effectuée, on calcule pour deux paires successives d'événements du domaine P et du domaine S les temps de trajets verticaux Tp et Ts qui, dans le domaine P et dans le domaine S correspondent à ces événements, puis le rapport $\delta T_s \,/\, \delta T_p$ de ces différences de temps de trajets verticaux dans le domaine S et dans le domaine P (étape 2).

Tp et Ts sont des valeurs observées sur les données originales.

On définit les événements successifs (n) et (n+1) par :

$$Tp(n+1) > Tp(n) \text{ et } Ts(n+1) > Ts(n)$$

où T représente l'espace temps.

Dans une autre étape (étape 3), éventuellement mise en oeuvre en parallèle à l'étape 2, on calcule une estimation $(\delta r/r)_a$ du rapport $\delta r/r$ à partir des amplitudes des traces sismiques et plus particulièrement à partir des paramètres de réflectivité qui peuvent être déterminés à partir des traces sismiques dont on dispose. Cette estimation est faite pour différents temps d'échantillonnage ti compris dans l'intervalle entre deux paires d'événements corrélés pour lesquels une approximation du rapport $r_t$ a été déterminée.

On sait en effet que les différences relatives $\delta V_p/V_p$ et $\delta V_s/V_s$ peuvent être présentées en fonction de paramètres de réflectivité. Par exemple, pour des données P et S à l'incidence normale ($\sigma=0$), les réflectivités $R_p$ et $R_s$ sont :

$$2R_p(0) = \delta V_p \,/\, V_p + \delta\rho \,/\, \rho \ \ et \ 2R_s(0) = \delta V_s \,/\, V_s + \delta\rho \,/\, \rho \qquad [1]$$

Par conséquent, on peut alors écrire :

$$2_{\llcorner} \,R_p(0) - R_s(0)_{\lrcorner} = \delta V_p \,/\, V_p - \delta V_s \,/\, V_s = (\delta r \,/\, r_a) \qquad [2]$$

En utilisant la relation [2], on détermine, pour chacun des temps ti, et pour un interface réflecteur donné, une estimation $(\delta r/r)_a$ du rapport $\delta r/r$, à partir des paramètres de réflectivité calculés pour les données P et S.

On notera que la bande passante et la résolution de cette estimation sont les mêmes que celles des données sismiques.

Dans une étape suivante (étape 4), on utilise les données calculées dans l'étape 2 et dans l'étape 3 pour déterminer pour chaque intervalle de temps (ti-1, ti) une estimation du rapport $r_{ti}$ (également désigné par $r_f$ dans la suite du texte).

A cet effet, la valeur de $r_i$ est calculée en fonction de la valeur de $r_{i-1}$ en posant :

$$r_a = (t_{si} - t_{si-1})/(t_{pi} - t_{pi-1})$$ [3]

et

$$(\delta r / r)_a = 2(r_i - r_{i-1}) / (r_i + r_{i-1})$$ [4]

et en égalant $(\delta r/r)_t$ et la valeur $(\delta r/r)_a$ estimée dans l'étape 3 pour le temps ti considéré, à partir de la détermination des paramètres de réflectivité $R_p(0)$ et $R_s(0)$.

On notera toutefois que cette égalisation suppose qu'une bande fréquencielle commune ait été imposée par filtrage aux données temps et amplitude.

Pour tenir compte de cette contrainte, on convolue l'ondelette sismique à $(\delta r/r)_t$.

On résout alors :

$$(\delta r/r)_a = 2[R_p(0) - R_s(0)] = (\delta r / r)_t^*$$ [5]

et

$$\langle r_t \rangle = \delta T_s / \delta T_p$$ [6]

où $\langle r_t \rangle$ désigne la moyenne des valeurs de $r_t$ sur l'intervalle considéré et où $\delta T_s / \delta T_p$ est le rapport calculé dans l'étape 2 pour cet intervalle.

Comme on l'aura compris, ceci correspond à un système à n équations et n inconnues (où est le nombre d'échantillons dans l'intervalle considéré - y compris les événements corrélés aux deux extrémités de l'intervalle).

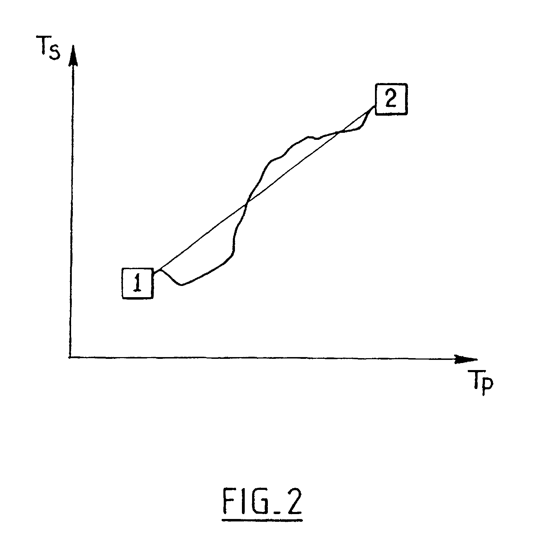

Sur la figure 2, la courbe R illustre, entre deux paires d'événements corrélés référencés par 1 et 2, le chemin le long duquel l'équation [5] est satisfaite, par exemple au sens des moindres carrés.

Ce chemin peut être déterminé par des procédés d'optimisation divers, par exemple par une méthode de Monte Carlo.

Après avoir ainsi déterminé r pour l'ensemble de l'intervalle considéré, on met en oeuvre, dans une étape 5, une inversion permettant de déterminer pour l'interface de réflexion considérée les différences relatives des vitesses $V_P$, $V_S$ et de la densité $\rho$.

Pour un exemple de traitement d'inversion, on pourra se référer aux deux publications suivantes :

S. Gluck, E. Juve and Y. Lafet 1997, High-resolution, impedance layering through 3-D stratigraphic inversion of postsback seismic data. - The Leading Edge (p1309-p1315) issue of September 1997.

S. Jin 1999, Reservoir characterisation using AVO attributes from multi-component data. - SBGf RIO99 expanded abstract.

Bien entendu, des estimations du rapport $\delta r/r$ à partir d'autres paramètres de réflectivité peuvent être envisagées.

De façon générale, toute association de deux modes de réflectivité différents permet d'écrire des relations telles que [1] et [2].

Par exemple, en adoptant pour simplifier des formes linéarisées des équations de Zoeppritz, on a, en associant le mode P et le mode PS avec les temps de propagation $t_{pp}$ et $t_{ps}$ :

$$r_i = 2(t_{PS} - t_{PP}/2)/t_{PP}$$ [7]

$$R_{PP} = 1/2(\delta V_P/V_P + \delta\rho / \rho)$$ [8a]

$$G_{PP} = \frac{1}{2}\frac{\delta V_P}{V_P} - \frac{4}{r^2}\frac{\delta V_S}{V_S} - \frac{2}{r^2}\frac{\delta\rho}{\rho}$$ [8b]

$$G_{PS} = -\frac{2}{r}\frac{\delta V_S}{V_S}\cdot\frac{2+r}{r}\frac{\delta\rho}{\rho} \tag{8c}$$

où $R_{pp}$, $G_{pp}$ et $G_{ps}$ sont des paramètres de réflectivité du mode P et du mode PS.

L'inversion du système [8] donne

$$((\delta V_P/V_P - \delta V_S/V_S) = (\delta r / r)_a:$$

soit :

$$(\delta r / r_a) = 1/2_L (4 + r)R_{PP} - rG_{PP} + (2 + r)G_{ps\lrcorner} \tag{9}$$

On dispose ainsi d'une estimation de $(\delta r/r)_a$ en fonction des paramètres de réflectivité $R_{pp}$, $G_{pp}$ et $G_{ps}$

**Revendications**

1. Procédé pour le traitement de traces sismiques correspondant à des modes de propagation dans le domaine P et dans le domaine S dans le sous-sol, selon lequel :

   - on détermine sur les traces sismiques les temps de trajets verticaux dans le domaine S et dans le domaine P d'au moins deux événements corrélés dans ces deux domaines, **caractérisé en ce que** :

     - on détermine pour ces événements le rapport entre d'une part la différence entre les temps de trajets verticaux de ces deux événements dans le domaine S et d'autre part la différence entre les temps de trajets verticaux de ces deux événements dans le domaine P,
     - on calcule, pour différents instants de l'Intervalle de temps défini entre les temps de trajets verticaux de ces deux événements dans le domaine S, les temps de trajets verticaux correspondant dans le domaine P ou,

   pour différents instants de l'intervalle de temps défini entre les temps de trajets verticaux de ces deux événements dans le domaine P, les temps de trajets verticaux correspondant dans le domaine S
   en imposant les deux contraintes suivantes :

   - pour tout l'intervalle considéré, le rapport $r_t = Ts/Tp$ est égal au rapport $Vp/Vs$ des vitesses dans le domaine P et dans le domaine S et
   - la valeur moyenne de ce rapport $r$ sur ledit intervalle correspond au rapport entre d'une part la différence entre les temps de trajets verticaux de ces événements dans le domaine S et d'autre part la différence entre les temps de trajets verticaux de ces événements dans le domaine P.

2. Procédé selon la revendication 1, **caractérisé en ce que** on détermine pour une pluralité de sous intervalles $(t_{i-1}, t_i)$ définis par des temps d'échantillonnage $t_i$ répartis sur l'intervalle considéré une estimation de $\delta V_p/V_p - \delta V_s/V_s$ en fonction de paramètres de réflectivité correspondant à l'un et à l'autre des deux modes de propagation, où $\delta V_p$ et $\delta V_s$ représentent respectivement la variation de la vitesse dans le domaine P et de la vitesse dans le domaine S sur un tel sous intervalle et **en ce qu'**on calcule en fonction de ces estimations des valeurs optimisées pour le rapport $r_t = Ts/Tp$.

3. Procédé selon la revendication 2, **caractérisé en ce qu'**on détermine pour les différents temps d'échantillonnage ti de l'intervalle considéré les valeurs de Ts et Tp telles que pour chaque sous intervalle, la variation différentielle relative $\delta r_t/r_t$ soit égale à l'estimation de $\delta V_p/V_p - \delta V_s/V_s$ déterminée pour ledit sous intervalle.

4. Procédé selon la revendication 3, **caractérisé en ce qu'**on détermine pour les différents temps d'échantillonnage ti de l'intervalle considéré les valeurs de Ts et Tp telles que pour chaque sous intervalle, la variation différentielle relative $\delta r/r$, convoluée à l'ondelette sismique, soit égale à l'estimation de $\delta V_p/V_p - \delta V_s/V_s$ déterminée pour ledit

sous intervalle.

5. Procédé selon l'une des revendications précédentes, **caractérisé en ce que** les traces sismiques correspondent à des modes de propagation P et S.

6. Procédé selon la revendication 5, prise en combinaison avec l'une des revendications 2 à 4, **caractérisé en ce que** pour estimer $\delta V_p/V_p - \delta V_s/V_s$, on calcule

$$(\delta r/r)_a = 2[R_p(0) - R_s(0)],$$

où $R_p(0)$ et $R_s(0)$ sont les réflectivités en mode P et en mode S à incidence normale.

7. Procédé selon l'une des revendications 1 à 4, **caractérisé en ce que** les traces sismiques correspondent à des modes de propagation P et PS.

8. Procédé selon la revendication 5, prise en combinaison avec l'une des revendications 2 à 4, **caractérisé en ce que** pour estimer $\delta V_p/V_p - \delta V_s/V_s$, on calcule

$$(\delta r/r)_a = 1/2 \lfloor (4+r)R_{PP} - rG_{PP} + (2+r)G_{ps} \rfloor$$

où $R_{pp}$, $G_{pp}$ et $G_{ps}$ sont des paramètres de réflectivité du mode P et du mode PS.

9. Procédé de prospection sismique selon lequel on émet un ébranlement dans le sous-sol et on recueille à l'aide de capteurs des traces sismiques correspondant à deux modes de propagation différents et selon lequel on met en oeuvre un procédé de traitement sismique pour déterminer une information sur la géologie du sous sol, **caractérisé en ce que** ledit procédé de traitement sismique est un procédé selon l'une des revendications précédentes.

**Patentansprüche**

1. Verfahren zum Verarbeiten von seismischen Messlinien, die unterirdischen Ausbreitungsmoden durch das Gebiet P und durch das Gebiet S entsprechen, bei dem:

- bei den seismischen Messlinien die vertikalen Durchgangszeiten durch das Gebiet S und durch das Gebiet P von wenigstens denjenigen Ereignissen, die in den zwei Gebieten korreliert sind, bestimmt werden, **dadurch gekennzeichnet, dass**:

- für die Ereignisse das Verhältnis zwischen einerseits der Differenz zwischen den vertikalen Durchgangszeiten dieser zwei Ereignisse durch das Gebiet S und andererseits der Differenz zwischen den vertikalen Durchgangszeiten dieser zwei Ereignisse durch das Gebiet P bestimmt werden,
- für verschiedene Zeitpunkte des Zeitintervalls zwischen den vertikalen Durchgangszeiten der zwei Ereignisse durch das Gebiet S die entsprechenden vertikalen Durchgangszeiten durch das Gebiet P berechnet werden oder bei verschiedenen Zeitpunkten des Zeitintervalls zwischen den vertikalen Durchgangszeiten dieser zwei Ereignisse durch das Gebiet P die entsprechenden vertikalen Durchgangzeiten durch das Gebiet S berechnet werden, wobei die beiden folgenden Bedingungen eingehalten werden müssen:

  ■ bei jedem betrachteten Intervall ist das Verhältnis $r_t = T_S/T_P$ gleich dem Verhältnis VpNs der Geschwindigkeiten durch das Gebiet P und durch das Gebiet S, und
  ■ der Mittelwert dieses Verhältnisses r auf dem Intervall entspricht dem Verhältnis zwischen einerseits der Differenz zwischen den vertikalen Durchgangszeiten dieser beiden Ereignisse durch das Gebiet S und andererseits der Differenz zwischen den vertikalen Durchgangszeiten dieser Ereignisse durch das Gebiet P.

2. Verfahren nach Anspruch 1, **dadurch gekennzeichnet, dass** für mehrere Teilintervalle ($t_{i-1}$, $t_i$), definiert durch Abtastzeitpunkte $t_i$, die über das betrachtete Intervall verteilt sind, eine Abschätzung von $\delta V_p/V_p - \delta V_s/V_s$ in Abhängigkeit von Reflexionsparametern entsprechend der einen und der anderen Ausbreitungsmode bestimmt wird,

wobei $\delta V_p$ und $\delta V_s$ jeweils die Geschwindigkeitsänderung durch das Gebiet P und die Geschwindigkeitsänderung durch das Gebiet S über ein solches Teilintervall darstellen, und dass in Abhängigkeit von diesen Abschätzungen die optimierten Werte für das Verhältnis $r_t = Ts/Tp$ berechnet werden.

3.  Verfahren nach Anspruch 2, **dadurch gekennzeichnet, dass** für die verschiedenen Abtastzeiten $t_i$ des betrachteten Intervalls die Werte Ts und Tp für jedes Teilintervall bestimmt werden, wobei die relative differenzielle Änderung $\delta r_t/r_t$ gleich der Abschätzung von $\delta V_p/V_p - \delta V_s/V_s$ ist, die für dieses Teilintervall bestimmt wurde.

4.  Verfahren nach Anspruch 3, **dadurch gekennzeichnet, dass** für die verschiedenen Abtastzeitpunkte $t_i$ des betrachteten Intervalls die Werte Ts und Tp für jedes Teilintervall bestimmt werden, wobei die mit dem seismischen Wavelet gefaltete differenzielle relative Änderung $\delta r/r_i$ gleich der Abschätzung von $\delta V_p/V_p - \delta V_s/V_s$ ist, die für dieses Teilintervall bestimmt wurde.

5.  Verfahren nach einem der vorangehenden Ansprüche, **dadurch gekennzeichnet, dass** die seismischen Messlinien den P- und S-Ausbreitungsmoden entsprechen.

6.  Verfahren nach Anspruch 5 in Verbindung mit einem der Ansprüche 2 bis 4, **dadurch gekennzeichnet, dass** für die Abschätzung von $\delta V_p/V_p - \delta V_s/V_s$

$$(\delta r/r)_a = 2[R_p(0) - R_s(0)]$$

berechnet wird, wobei $R_p(0)$ und $R_s(0)$ die Reflektivitäten der P-Mode und der S-Mode bei senkrechtem Einfall sind.

7.  Verfahren nach einem der Ansprüche 1 bis 4, **dadurch gekennzeichnet, dass** die seismischen Messlinien P- und PS-Ausbreitungsmoden entsprechen.

8.  Verfahren nach Anspruch 5 in Verbindung mit einem der Ansprüche 2 bis 4, **dadurch gekennzeichnet, dass** für die Abschätzung von $\delta V_p/V_p - \delta V_s/V_s$

$$(\delta r/r)_a = 1/2[(4+r)R_{pp} - rG_{pp} + (2+r)G_{ps}]$$

berechnet wird, wobei $R_{pp}$, $G_{pp}$ und $G_{ps}$ Reflexionsparameter der P-Mode und der PS-Mode sind.

9.  Verfahren zur seismischen Prospektierung, wobei eine Erschütterung unterirdisch erzeugt wird und mit Hilfe von Sensoren für seismische Messlinien entsprechend zwei unterschiedlichen Ausbreitungsmoden empfangen wird und ein seismisches Verarbeitungsverfahren durchgeführt wird, um eine Information über die Geologie des unterirdischen Bereiches zu bestimmen, **dadurch gekennzeichnet, dass** das Verfahren zur seismischen Verarbeitung ein Verfahren nach einem der vorangehenden Ansprüche ist.

**Claims**

1.  A method of processing seismic traces corresponding to modes of propagation in the P domain and in the S domain in the subsoil, in which method:

    · the vertical travel times in the S domain and in the P domain of at least two correlated events in said two domains are determined from the seismic traces, the method being **characterized in that**:

        · for said events, the ratio between firstly the difference between the vertical travel times of said two events in the S domain, and secondly the difference between the vertical travel times of said two events in the P domain is determined; and
        · for different instants of the time interval defined between the vertical travel times of said two events in the S domain, the corresponding vertical travel times in the P domain are calculated, or

    for different instants of the time interval defined between the vertical travel times of said two events in the P domain, the corresponding vertical travel times in the S domain are calculated

while imposing the following two constraints:

- for any interval in question, the ratio $r_t = T_s/T_p$ is equal to the ratio $V_p/V_s$ of the speeds in the P domain and in the S domain; and
- the mean value of said ratio $\underline{r}$ over said time interval corresponds to the ratio between firstly the difference between the vertical travel times of said events in the S domain, and secondly the difference between the vertical travel times of said two events in the P domain.

2. A method according to claim 1, **characterized in that** over a plurality of subintervals $(t_{i-1}, t_i)$ defined by sampling times $t_i$ distributed over the time interval in question, an estimate of $\delta V_p/V_p - \delta V_s/V_s$ is determined as a function of reflectivity parameters corresponding to the two modes of propagation respectively, where $\delta V_p$ and $\delta V_s$ respectively represent the variation in speed in the P domain and in speed in the S domain over such a subinterval, and **in that** optimized values for the ratio $r_t = T_s/T_p$ is calculated as a function of said estimates.

3. A method according to claim 2, **characterized in that** for the various sampling times $t_i$ of the time interval in question, the values of $T_s$ and $T_p$ are determined so that for each subinterval, the relative differential variation $\delta r_t/r_t$ is equal to the estimate of $\delta V_p/V_p - \delta V_s/V_s$ as determined for said subinterval.

4. A method according to claim 3, **characterized in that** for the various sampling times $t_i$ of the time interval in question, the values of $T_s$ and $T_p$ are determined so that for each subinterval, the relative differential variation $\delta r/r$, convoluted with the seismic wavelet, is equal to the estimate of $\delta V_p/V_p - \delta V_s/V_s$ as determined for said subinterval.

5. A method according to any preceding claim, **characterized in that** the seismic traces correspond to P and S propagation modes.

6. A method according to claim 5, taken in combination with any one of claims 2 to 4, **characterized in that** to estimate $\delta V_p/V_p - \delta V_s/V_s$, the following is calculated:

$$(\delta r/r)_a = 2[R_p(0) - R_s(0)]$$

where $R_p(0)$ and $R_s(0)$ are the P mode and S mode reflectivities at normal incidence.

7. A method according to any one of claims 1 to 4, **characterized in that** the seismic traces correspond to P propagation mode and to PS propagation mode.

8. A method according to claim 5, taken in combination with any one of claims 2 to 4, **characterized in that** in order to estimate $\delta V_p/V_p - \delta V_s/V_s$, the following is calculated:

$$(\delta r/r)_a = \tfrac{1}{2}[(4+r)/R_{pp} - rG_{pp} + (2+r)G_{ps}]$$

where $R_{pp}$, $G_{pp}$, and $G_{ps}$ are P mode and PS mode reflectivity parameters.

9. A seismic prospecting method in which a disturbance is emitted into the subsoil and sensors are used to pick up seismic traces corresponding to two different propagation modes, and in which a seismic processing method is implemented to determine information about the geology of the subsoil, the method being **characterized in that** said seismic treatment method is a method according to any preceding claim.

DETERMINATION DES
PAIRES CORRELEES

_1_

ESTIMATION

DE $(\delta r / r)_a$

_3_

CALCUL DE

$< r_t > = \dfrac{\delta Ts}{\delta Tp}$

_2_

RESOLUTION DE

$- (\delta r / r)._t^* = (\dfrac{\delta r / r)_a}{\delta Ts}$

$- < r_t > = \dfrac{\delta Ts}{\delta Tp}$

_4_

$n$

INVERSION A L'INTERFACE

_5_

## FIG_1

FIG.2